(19) Europäisches Patentamt / European Patent Office / Office européen des brevets

(11) **EP 2 081 809 B1**

(12) **FASCICULE DE BREVET EUROPEEN**

(45) Date de publication et mention de la délivrance du brevet:
**03.10.2012 Bulletin 2012/40**

(21) Numéro de dépôt: **07858639.3**

(22) Date de dépôt: **22.10.2007**

(51) Int Cl.:
**B60W 30/02** *(2012.01)*       **B60K 28/16** *(2006.01)*
**B60T 8/175** *(2006.01)*       **B60T 8/1761** *(2006.01)*

(86) Numéro de dépôt international:
**PCT/FR2007/052217**

(87) Numéro de publication internationale:
**WO 2008/059147 (22.05.2008 Gazette 2008/21)**

(54) **PROCEDE ET DISPOSITIF DE CONTROLE DU GLISSEMENT DES ROUES MOTRICES SUR ADHERENCE ASYMETRIQUE POUR VEHICULE AUTOMOBILE**

VERFAHREN UND VORRICHTUNG ZUR STEUERUNG DES GLEITENS VON ANTRIEBSRÄDERN BEI ASYMMETRISCHER ADHÄSION FÜR EIN KRAFTFAHRZEUG

METHOD AND DEVICE FOR CONTROLLING THE SLIDING OF DRIVING WHEELS UPON ASYMMETRIC ADHESION FOR AN AUTOMOTIVE VEHICLE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **15.11.2006 FR 0609975**

(43) Date de publication de la demande:
**29.07.2009 Bulletin 2009/31**

(73) Titulaire: **Renault S.A.S.**
**92100 Boulogne-Billancourt (FR)**

(72) Inventeurs:
• **CLAEYS, Xavier**
  **75015 Paris (FR)**
• **MARSILIA, Marco**
  **92130 Issy Les Moulineaux (FR)**

(56) Documents cités:
**EP-A2- 1 338 490     DE-C1- 4 011 974**
**US-A- 6 161 907**

**Description**

L'invention concerne un procédé de contrôle du glissement des roues de l'essieu moteur avant ou arrière d'un véhicule automobile, en particulier du glissement sur route à adhérence asymétrique. Elle concerne également un dispositif de mise en oeuvre du procédé.

Le contrôle du glissement d'une roue motrice est utilisé dans la régulation anti-patinage à l'entraînement, qui consiste à diminuer le couple moteur appliqué par le moteur du véhicule aux roues en cas de glissement d'au moins une roue motrice au-delà d'un premier seuil de glissement, puis à augmenter de nouveau ledit couple moteur lorsque le glissement passe sous un seuil inférieur au premier. Cette adaptation du couple moteur est automatique lors des démarrages ou des accélérations du véhicule sur une route à faible adhérence, au contact de laquelle les roues motrices patinent rapidement.

Le problème que cherche à résoudre l'invention concerne les situations de départ au glissement d'une seule roue d'un essieu moteur, c'est-à-dire quand l'effort appliqué à la roue est moteur et l'adhérence est faible du côté où la roue s'emballe, en particulier lorsque la vitesse du véhicule est supérieure à un seuil de l'ordre de quelques km/h, autrement dit hors démarrage.

Une solution actuelle est décrite dans le brevet américain US 6161 907, déposé au nom de KELSEY-HAYES. Elle consiste en une régulation de type Proportionnel Intégrale sur la vitesse de la roue qui glisse, qui ne permet pas d'assurer des performances identiques pour un glissement fort et pour un glissement faible. Pour pallier ce problème, il faudrait modifier le réglage du régulateur en ligne en fonction des conditions du glissement, mais la solution est plus difficile à régler et/ou moins robuste du fait du choix de la commande. Généralement, des simplifications sont opérées pour embarquer cette stratégie sur véhicule, avec comme conséquence une dégradation des performances.

Selon l'invention, le procédé de contrôle du glissement des roues de l'essieu moteur d'un véhicule qui roule sur une route à adhérence asymétrique intervient en situation de roulage et non de démarrage, alors que la vitesse du véhicule est supérieure à un seuil de l'ordre de quelques km/h. Sous l'effet du couple moteur, seule une roue de l'essieu s'emballe dans les phases où l'adhérence entre les roues droite et gauche n'est pas la même, c'est la roue sur faible adhérence. Le couple transmis à la roue sur forte adhérence est alors faible, ce qui empêche le décollage du véhicule.

Il est par ailleurs connu, par le document DE 4011974, un procédé de contrôle de la vitesse de rotation des roues du véhicule où, pour éviter un emballement de la vitesse d'une roue en cas de patinage asymétrique, il est procédé, lorsqu'un seuil de vitesse de cette roue est dépassé, à une réduction de cette vitesse par freinage.

Le but de l'invention est de proposer un procédé de contrôle du glissement des roues motrices sur adhérence asymétrique qui s'adapte à la différence d'adhérence entre ces deux roues par deux modes de régulation différents, qui sont actionnés simultanément, un premier mode de régulation du couple de freinage et un second mode de régulation du couple moteur.

Pour cela, un premier objet de l'invention est un procédé de contrôle du glissement des deux roues de l'essieu moteur sur adhérence asymétrique pour véhicule automobile selon la revendication 1.

Selon une caractéristique du procédé de contrôle, la consigne de vitesse de rotation $\dot{\theta}^d_{rfa}$ est établie également en fonction de la consigne de glissement $S_{Cfa}$, la vitesse de référence $V_{ref}$ du véhicule désirée par le conducteur et du rayon r de la roue :

$$(E_1) \qquad \dot{\theta}^d_{rfa} = \left(1 + S_{Cfa}\right)\frac{V_{ref}}{r}$$

Selon une caractéristique du procédé de contrôle, il propose une régulation du couple de freinage, en boucle fermée, par asservissement de la vitesse $\dot{\theta}_{rfa}$ de rotation de la roue motrice sur faible adhérence, du type proportionnel intégral avec avance de phase, exprimé en continu par l'équation suivante :

$$K(p) = K_p * \frac{T_i + p}{p} * \frac{1 + \tau_1 p}{1 + \tau_2 p}$$

avec $\tau_1$ et $\tau_2$ des constantes d'avance de phase, et $K_p$ et $T_i$ des paramètres de commande.

Selon une autre caractéristique du procédé de contrôle, le mode de régulation du couple de freinage, en boucle fermée, par asservissement de la vitesse de rotation $\dot{\theta}_{rfa}$ de ladite roue motrice sur faible adhérence, comprend une première commande issue d'un premier filtre K$_1$, recevant en entrée la différence entre la vitesse de rotation $\dot{\theta}_{rfa}$

mesurée et la consigne de vitesse $\dot{\theta}^d_{rfa}$, et de fonction de transfert K$_1$(p) telle que :

$$K_1(p) = \frac{4\tau_2 K_p \left(T_i + p\right)\!\left(1 + \tau_1 p\right)}{\left(1 + 2\tau_2 p\right)^2}$$

avec $\tau_1$ et $\tau_2$ des constantes d'avance de phase, et K$_p$ et T$_i$ des paramètres de commande,
à laquelle s'ajoute une deuxième commande établie en fonction de l'actionneur de freinage à partir d'un second filtre K$_2$ s'appliquant au couple de freinage réel C$_F$ délivré par les freins F du véhicule et de fonction de transfert K$_2$(p) tel que :

$$K_2(p) = \frac{1}{\left(1 + 2\tau_2 p\right)^2}$$

la somme de ces deux commandes passant dans un saturateur, pour que le couple de freinage soit toujours inférieur à la demande D$_F$ du conducteur, avant de constituer la consigne de couple C$_{F\text{-cons}}$ pour l'actionneur de freinage.

Selon une caractéristique du procédé de contrôle, il propose deux modes de régulation du couple moteur différents selon le niveau de glissement de la roue motrice sur forte adhérence, soit si le glissement est inférieur à un premier seuil déterminé, lui-même inférieur à la consigne de glissement, un mode de régulation du couple moteur en boucle ouverte, et si le glissement est supérieur à un deuxième seuil déterminé, un mode de régulation par asservissement, en boucle fermée, de la vitesse de rotation de ladite roue motrice sur forte adhérence à une consigne qui est fonction de la consigne de glissement.

Selon une caractéristique du procédé de contrôle, il applique simultanément à la roue motrice sur faible adhérence, une régulation du couple moteur en boucle ouverte, qualifiée d'asymétrique normale, quand le glissement S$_{xFA}$ de la roue motrice sur forte adhérence est inférieur à un seuil minimal de glissement S$_{FA}$, consistant à ajouter au couple moteur C$_M$ réel délivré par le moteur thermique ou électrique une rampe de pente K$_A$ à chaque instant n d'échantillonnage, tel que :

$$(E_4) \qquad C_{M,n} = C_{M,n-1} + K_A * T$$

dans laquelle T est la période d'échantillonnage.

Selon une caractéristique du procédé de contrôle, il applique simultanément à la roue motrice sur faible adhérence, une régulation du couple moteur en boucle fermée, qualifiée d'asymétrique limite, quand le glissement S$_{xFA}$ de la roue sur forte adhérence est supérieur à un seuil maximal S'$_{FA}$, consistant en un asservissement de la vitesse de

rotation $\dot{\theta}_{rFA}$ de la roue sur forte adhérence à une consigne $\dot{\theta}^d_{rFA}$, déterminée par rapport à la consigne de glissement, cette boucle fermée délivrant une consigne de couple C'$_{M\text{-cons}}$ au moteur du véhicule qui va appliquer un couple moteur C'$_M$ réel aux roues motrices du véhicule.

Selon une caractéristique du procédé de contrôle, le couple moteur C'$_M$ délivré par le moteur et la vitesse de rotation $\dot{\theta}_{rFA}$ mesurée de la roue motrice sur forte adhérence sont envoyés à l'entrée de la boucle fermée ainsi que la vitesse de référence V$_{ref}$ du véhicule pour le calcul de la consigne de vitesse de rotation $\dot{\theta}^d_{rFA}$ de la roue, cette boucle étant destinée à réguler la vitesse $\dot{\theta}_{rFA}$ de rotation de ladite roue sur forte adhérence sur la consigne $\dot{\theta}^d_{rFA}$, qui est

établie en fonction d'une consigne de glissement $S_{CFA}$ :

$$(E_5) \qquad \dot{\theta}_{rFA}^{d} = \left(1 + S_{CFA}\right)\frac{V_{ref}}{r}$$

Selon une caractéristique du procédé de contrôle, les consignes de glissement sont fonction de plusieurs critères dynamiques du véhicule, tels que l'enfoncement de la pédale d'accélérateur, l'angle du volant, la vitesse de référence du véhicule, le signe de la dérivée du glissement.

Un second objet de l'invention est un dispositif de mise en oeuvre du procédé de contrôle du glissement des deux roues motrices pour véhicule automobile, comprenant des moyens d'estimation de la vitesse du véhicule, des moyens d'estimation du couple moteur et des capteurs de vitesse des roues, caractérisé en ce qu'il comprend de plus :

- deux régulateurs, l'un du couple de freinage et l'autre du couple moteur, en boucle fermée, de type proportionnel intégral avec avance de phase, de fonction de transfert K(p) :

$$K\left(p\right) = K_p * \frac{T_i + p}{p} * \frac{1 + \tau_1 p}{1 + \tau_2 p}$$

avec $\tau_1$, et $\tau_2$ des constantes d'avance de phase, et $K_p$ et $T_i$ des paramètres de commande,
associés chacun à un saturateur, pour que respectivement le couple de freinage et le couple moteur soient toujours inférieurs à la demande du conducteur,
- un régulateur du couple moteur en boucle ouverte, ajoutant au couple moteur réel délivré par le moteur une rampe de pente $K_A$ à chaque instant n d'échantillonnage, de période d'échantillonnage T :

$$C_{M,n} = C_{M,n-1} + K_A * T$$

associé à un saturateur pour que le couple moteur soit toujours inférieur à la demande du conducteur,
- des moyens de commutation entre les deux régulateurs du couple moteur sur signal d'état de la part d'un module logique d'activation.

D'autres caractéristiques et avantages de l'invention apparaîtront à la lecture de la description d'un exemple de réalisation, illustrée par les figures suivantes qui sont :

- la figure 1 : les variations de l'effort longitudinal transmis par la route au pneumatique de la roue, en fonction du glissement longitudinal,
- la figure 2 : un schéma de principe du procédé de contrôle du glissement d'une roue motrice à faible adhérence,
- la figure 3 : un schéma fonctionnel de la régulation du couple de freinage selon l'invention,
- la figure 4 : un schéma de principe de la régulation du couple moteur,
- les figures 5a et 5b : deux schémas fonctionnels de la régulation du couple moteur appliqué sur l'essieu moteur du véhicule, en boucle ouverte et en boucle fermée,
- la figure 6 : un organigramme des différentes étapes du procédé selon l'invention.

Le procédé de contrôle du glissement des roues d'un véhicule selon l'invention, dans le cadre d'une régulation anti-patinage ASR, intervient dans les situations de départ au glissement, l'effort extérieur appliqué aux roues étant moteur ou freineur, alors que la vitesse du véhicule est supérieure à un seuil de l'ordre de quelques km/h, dans les phases de glissement sur route à adhérence asymétrique, c'est-à-dire quand les deux roues de l'essieu moteur du véhicule, qu'il soit avant ou arrière, n'ont pas la même vitesse de rotation.

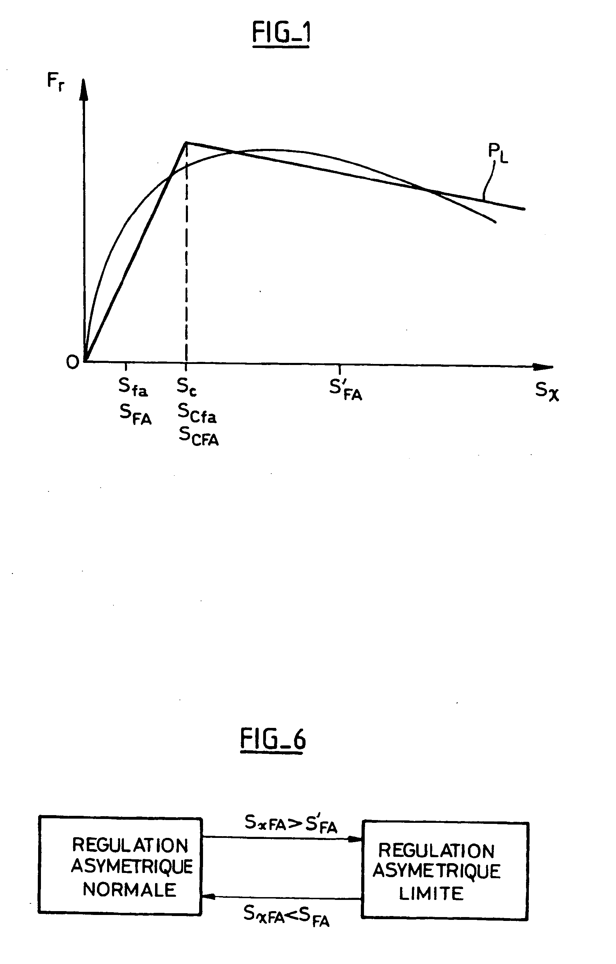

Comme le montre la figure 1, sur laquelle est dessinée une représentation linéaire $P_L$ approximative du pneu, pour un glissement faible de la roue, inférieur à une consigne $S_C$, voisine de 10 % de la vitesse longitudinale $V_{ref}$ du véhicule :

$$S_x = \frac{r * \dot{\theta}_r - V_{ref}}{V_{ref}}$$

avec $\dot{\theta}_r$ la vitesse de rotation des roues de rayon r, l'effort longitudinal $F_r$ transmis par la route croît très rapidement, puis il décroît lorsque la valeur $S_x$ du glissement est supérieure à $S_C$. Cette consigne $S_C$ peut être variable en fonction de plusieurs critères dynamiques du véhicule, notamment :

- l'enfoncement de la pédale d'accélérateur,
- l'angle du volant,
- la vitesse de référence du véhicule,
- le signe de la dérivée du glissement ...

Ainsi, le glissement $S_{xfa}$ et $S_{xFA}$ des roues sur faible et forte adhérence respectivement est identifié par les deux formules suivantes :

$$S_{xfa} = \frac{r * \dot{\theta}_{rfa} - V_{ref}}{V_{ref}} \qquad et \qquad S_{xFA} = \frac{r * \dot{\theta}_{rFA} - V_{ref}}{V_{ref}}$$

la roue sur faible adhérence étant celle qui glisse le plus au moment du passage en mode asymétrique dans la machine d'état, et les consignes de glissement sont référencées respectivement $S_{Cfa}$ et $S_{CFA}$.

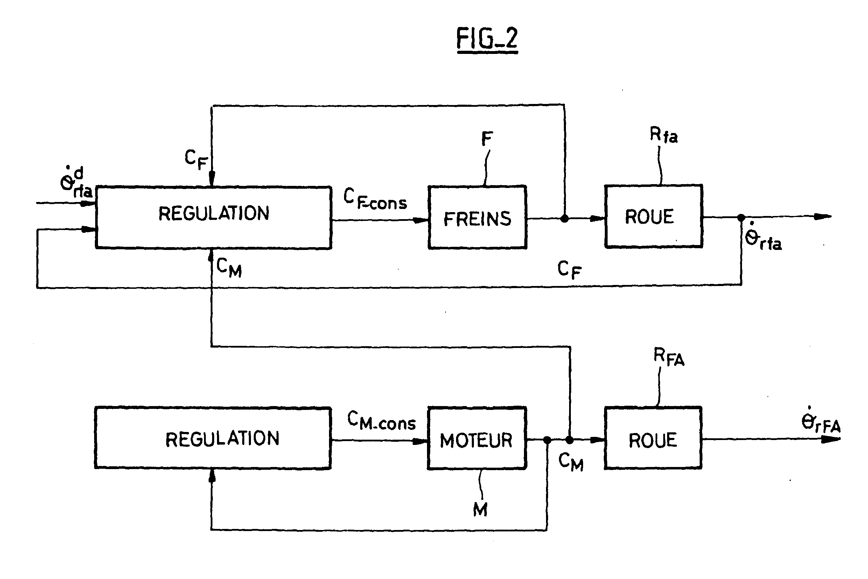

Selon l'invention, le procédé de contrôle du glissement applique à la roue $R_{fa}$ motrice sur faible adhérence d'une part, un couple de freinage $C_F$ obtenu par une régulation « Feedback » en boucle fermée et d'autre part, un couple moteur $C_M$ obtenu par une régulation dépendant du niveau de glissement de la roue $R_{FA}$ à forte adhérence du même essieu moteur, comme le montre le schéma de principe de la figure 2.

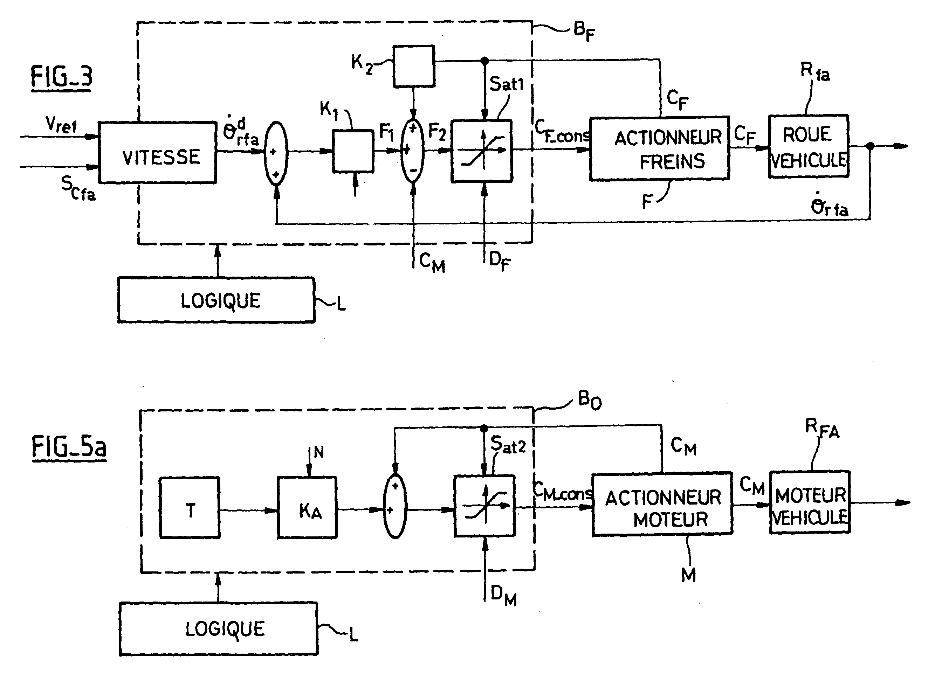

Selon le schéma fonctionnel de la figure 3, la régulation du couple de freinage en boucle fermée, appliquée à la roue sur faible adhérence en train de glisser lorsque le glissement $S_{xfa}$ est supérieur à un seuil $S_{fa}$ minimal, consiste en un asservissement de la vitesse de rotation $\dot{\theta}_{rfa}$ de cette roue à une consigne $\dot{\theta}_{rfa}^d$, qui est déterminée par rapport à ladite consigne de glissement. Cette boucle fermée $B_F$ délivre une consigne de couple $C_{F-cons}$ aux freins F du véhicule qui vont appliquer un couple de freinage $C_F$ réel à la roue motrice $R_{fa}$ à faible adhérence du véhicule.

Le couple de freinage $C_F$ délivré par les freins F et la vitesse de rotation $\dot{\theta}_{rfa}$ de ladite roue sont envoyés à l'entrée de la boucle fermée, qui est destinée à réguler la vitesse $\dot{\theta}_{rfa}$ de rotation de la roue motrice $R_{fa}$ sur la consigne $\dot{\theta}_{rfa}^d$ correspondant à la vitesse référence $V_{ref}$ du véhicule désirée par le conducteur. Cette consigne de vitesse de rotation $\dot{\theta}_{rfa}^d$ est établie également en fonction de la consigne de glissement $S_{Cfa}$ selon la relation ($E_1$) suivante :

$$(E_1) \qquad \dot{\theta}_{rfa}^d = \left(1 + S_{Cfa}\right)\frac{V_{ref}}{r}$$

La consigne de glissement peut varier en fonction de plusieurs critères dynamiques du véhicule, tels que l'enfoncement de la pédale d'accélérateur, l'angle volant ou le signe de la dérivée du glissement.

Le procédé selon l'invention prend en compte le fait que le véhicule est un système très peu dynamique en cas de faibles glissements mais est très dynamique en cas de glissements importants pour lesquels il propose une régulation du couple de freinage, en boucle fermée, par asservissement de la vitesse de rotation de la roue sur faible adhérence. Pour obtenir une régulation performante avec une bonne marge de stabilité, le régulateur selon l'invention est du type proportionnel intégral avec avance de phase, exprimé en continu par l'équation suivante ($E_2$) :

$$(E_2) \qquad K(p) = K_p * \frac{T_i + p}{p} * \frac{1 + \tau_1 p}{1 + \tau_2 p}$$

avec $\tau_1$ et $\tau_2$ des constantes d'avance de phase, et $K_p$ et $T_i$ des paramètres de commande.

Il est écrit sous la forme de deux filtres $K_1$ et $K_2$ afin d'améliorer la phase transitoire pendant la transition entre régulation symétrique et asymétrique. La phase transitoire est plus confortable. Pour cela, selon le schéma de la figure 3, la régulation du couple de freinage $C_F$, par asservissement de la valeur mesurée ou estimée de la vitesse de rotation $\dot{\theta}_{rfa}$ de la roue motrice à une consigne $\dot{\theta}^d_{rfa}$ de vitesse déterminée par cartographie à partir de la consigne de glissement $S_{Cfa}$, comprend une première commande $F_1$ issue d'un premier filtre $K_1$, de fonction de transfert $K_1(p)$, recevant en entrée la différence entre la vitesse de rotation $\dot{\theta}_{rfa}$ mesurée et la consigne de vitesse $\dot{\theta}^d_{rfa}$, à laquelle s'ajoute une deuxième commande $F_2$ établie en fonction de l'actionneur de freinage.

La fonction de transfert $K_1(p)$ est de la forme :

$$K_1(p) = \frac{4\tau_2 K_p (T_i + p)(1 + \tau_1 p)}{(1 + 2\tau_2 p)^2}$$

La deuxième commande $F_2$ est obtenue à partir d'un second filtre $K_2$ s'appliquant au couple de freinage réel $C_F$ délivré par les freins du véhicule, de fonction de transfert $K_2(p)$ de la forme :

$$K_2(p) = \frac{1}{(1 + 2\tau_2 p)^2}$$

Les deux commandes s'ajoutent puis passent dans un saturateur $S_{at1}$, pour que le couple de freinage soit toujours inférieur à la demande $D_F$ du conducteur, avant de constituer la commande $C_{F\text{-cons}}$ envoyée à l'actionneur F de freinage du véhicule :

$$(E_3) \qquad C_{F\text{-cons}} = K_2(p)C_F + K_1(p)\left(\dot{\theta}^d_{rfa} - \dot{\theta}_{rfa}\right)$$

A ce couple de freinage $C_F$ obtenu par une régulation « Feedback » en boucle fermée, le procédé de contrôle selon l'invention ajoute, à la roue motrice $R_{fa}$ sur faible adhérence, un couple moteur $C_M$ obtenu par une régulation dépendant du niveau de glissement de la roue motrice $R_{FA}$ sur forte adhérence du même essieu moteur, comme le montre le schéma de principe de la figure 2.

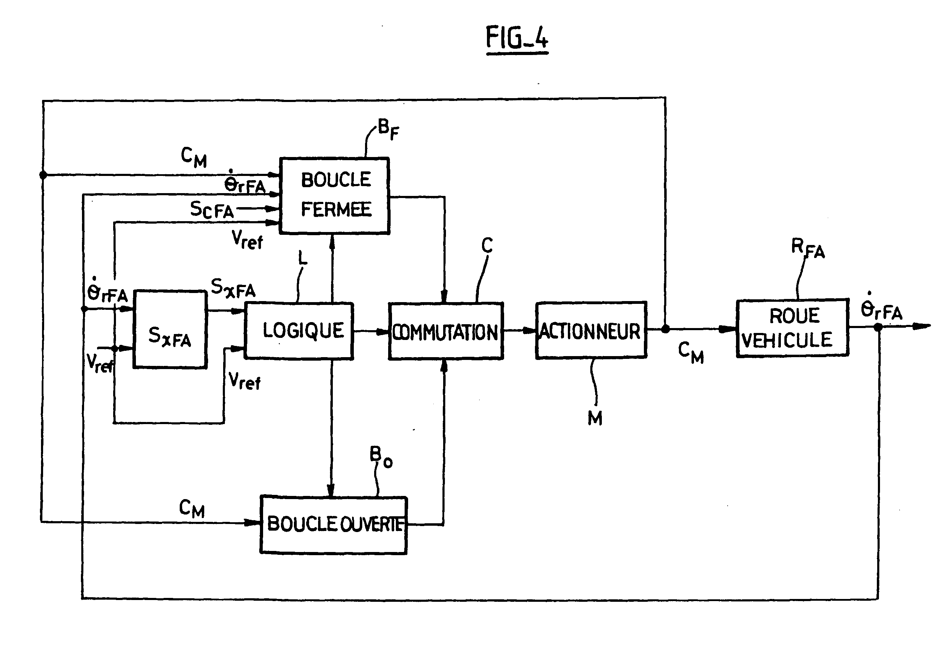

Ainsi, en fonction du niveau de glissement $S_{xFA}$ de la roue motrice sur forte adhérence $R_{FA}$, qui est différent du niveau de glissement de l'autre roue motrice sur faible adhérence, la régulation du couple moteur $C_M$ appliqué à l'essieu moteur du véhicule en fonction du niveau de glissement de la roue à forte adhérence, est effectuée selon deux modes différents, l'un en boucle ouverte $B_o$ et l'autre en boucle fermée $B_F$, la commutation entre ces deux modes de régulation étant réalisée par des moyens C, sur signal d'état de la part d'un module logique L d'activation. La figure 4 est un schéma de principe de la régulation du couple $C_M$ en fonction du glissement $S_{xFA}$ de la roue motrice sur forte adhérence.

Selon une caractéristique de l'invention, le procédé applique une régulation du couple moteur en boucle ouverte, qualifiée d'asymétrique normale, quand le glissement $S_{xFA}$ de la roue motrice $R_{FA}$ sur forte adhérence est inférieur à un seuil minimal de glissement $S_{FA}$, inférieur à la consigne de glissement $S_{CFA}$. Comme le montre le schéma fonctionnel de cette boucle ouverte (figure 5a), elle consiste à ajouter au couple moteur $C_M$ réel, délivré par le moteur M, thermique ou électrique, une rampe de pente $K_A$ à chaque instant n d'échantillonnage, selon la relation suivante ($E_4$), dans laquelle T est la période d'échantillonnage :

$$(E_4) \qquad C_{M,n} = C_{M,n-1} + K_A * T$$

La pente $K_A$ varie en fonction du régime moteur : à basse vitesse, la pente est plus importante pour démarrer sur une pente sur adhérence asymétrique, le cas échéant, car cette situation requiert un couple important de relance pour éviter de caler ou de reculer le véhicule. Ainsi, pour un régime moteur N inférieur à 1200 tours/min, $K_A$ est égal à 1300N.m/s, et pour un régime moteur N supérieur ou égal à 1200 tours/min, $K_A$ est égal à 700N.m/s par exemple.

La commande résultante est passée dans un saturateur $S_{at2}$ pour que le couple moteur ne soit jamais supérieur à la demande $D_M$ du conducteur. Puis la consigne saturée $C_{M-cons}$ obtenue commande le fonctionnement du moteur, qui délivre un couple réel. La roue sur forte adhérence qui glissait faiblement est relancée par une action du moteur, dont le couple moteur nominal est augmenté progressivement en boucle ouverte, selon un principe de rampe dont la pente est fonction du régime du moteur.

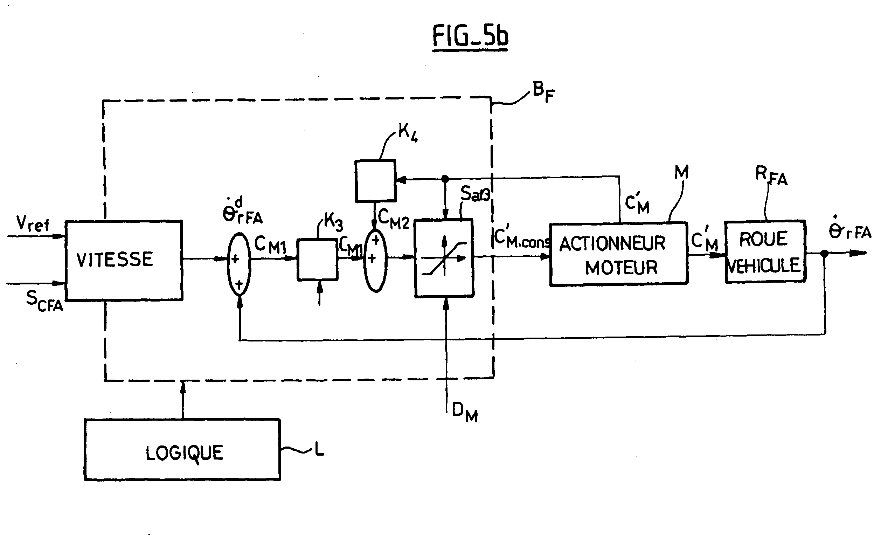

Lorsque la roue motrice sur forte adhérence de l'essieu moteur s'emballe à son tour, le procédé de contrôle selon l'invention prévoit un second mode de régulation du couple moteur, en boucle fermée, comme celui décrit auparavant pour le contrôle du glissement de la roue motrice sur faible adhérence (figure 5b). Cette régulation est qualifiée d'asymétrique limite. Le procédé consiste en un asservissement de la vitesse de rotation $\dot{\theta}_{rFA}$ de la roue sur forte adhérence à une consigne $\dot{\theta}^d_{rFA}$, lorsque son glissement $S_{xFA}$ est supérieur à un seuil $S'_{FA}$ maximal relativement important, supérieur à la consigne de glissement $S_{CFA}$, la consigne $\dot{\theta}^d_{rFA}$ étant déterminée par rapport à ladite consigne de glissement. Cette boucle fermée $B_F$ délivre une consigne de couple $C'_{M-cons}$ au moteur M, thermique ou électrique, du véhicule qui va appliquer un couple moteur $C'_M$ réel aux roues motrices du véhicule.

Le couple moteur $C'_M$ délivré par le moteur M et la vitesse de rotation $\dot{\theta}_{rFA}$ de la roue motrice sur forte adhérence sont envoyés à l'entrée de la boucle fermée. Cette boucle est destinée à réguler la vitesse $\dot{\theta}_{rFA}$ de rotation des roues sur la consigne $\dot{\theta}^d_{rFA}$ correspondant à la vitesse $V_{ref}$ du véhicule désirée par le conducteur. Cette consigne de vitesse de rotation $\dot{\theta}^d_{rFA}$ est établie aussi en fonction d'une consigne de glissement $S_{CFA}$ selon la relation ($E_5$) suivante :

$$(E_5) \qquad \dot{\theta}^d_{rFA} = \left(1 + S_{CFA}\right)\frac{V_{ref}}{r}$$

Cette consigne $S_{CFA}$ peut varier en fonction de plusieurs critères dynamiques du véhicule, tels que l'enfoncement de la pédale d'accélérateur, l'angle volant, le signe de la dérivée du glissement ou la vitesse du véhicule. Le seuil $S_2$ pour la roue à forte adhérence peut être supérieur au seuil $S_5$ concernant la roue sur faible adhérence.

Pour obtenir une régulation performante avec une bonne marge de stabilité, le régulateur selon l'invention est du type proportionnel intégral avec avance de phase, exprimé en continu par l'équation suivante ($E_6$) :

$$(E_6) \qquad K(p) = K'_p * \frac{T_j + p}{p} * \frac{1 + \tau_3 p}{1 + \tau_4 p}$$

avec $\tau_3$ et $\tau_4$ des constantes d'avance de phase, et K'p et $T_j$ des paramètres de commande.

Il est écrit sous la forme de deux filtres $K_3$ et $K_4$ afin d'améliorer les commutations entre le mode de régulation en boucle fermée et celui en boucle ouverte. La phase transitoire est plus confortable et la commande n'est plus saturée. Pour cela, selon le schéma de la figure 5b, la régulation du couple moteur $C_M$, par asservissement de la valeur mesurée ou estimée de la vitesse de rotation $\dot{\theta}_{rFA}$ de la roue motrice à une consigne $\dot{\theta}^d_{rFA}$ de vitesse déterminée par cartographie à partir d'une consigne de glissement $S_{CFA}$, comprend une première commande $C_{M1}$ issue d'un premier filtre $K_3$, de fonction de transfert $K_3(p)$, recevant en entrée la différence entre la vitesse de rotation $\dot{\theta}_{rFA}$ et la consigne de vitesse

$\dot{\theta}^d_{rFA}$, à laquelle s'ajoute une deuxième commande $C_{M2}$ établie en fonction de l'actionneur.

La fonction de transfert $K_3(p)$ est de la forme :

$$K_3(p) = \frac{4\tau_4 K'_p (T_j + p)(1 + \tau_3 p)}{(1 + 2\tau_4 p)^2}$$

La deuxième commande $C_{M2}$ est obtenue à partir d'un second filtre $K_4$ s'appliquant au couple moteur réel C'$_M$ délivré par le moteur du véhicule, de fonction de transfert $K_4(p)$ de la forme :

$$K_4(p) = \frac{1}{(1 + 2\tau_4 p)^2}$$

Les deux commandes s'ajoutent puis passent dans un saturateur $S_{at3}$, pour que le couple moteur soit toujours inférieur à la demande $D_M$ du conducteur, avant de constituer la commande C'$_{M-cons}$ envoyée à l'actionneur M du véhicule :

$$(E_8) \qquad C'_{M-cons} = K_4(p) C'_M + K_3(p)\left(\dot{\theta}^d_{rFA} - \dot{\theta}_{rFA}\right)$$

Ces deux modes de régulation du couple moteur sont combinés pour s'adapter aux différentes conditions d'adhérence de ladite roue motrice sur forte adhérence. Le mode en boucle fermée permet de diminuer le couple moteur appliqué à cette roue lorsque le glissement est important, supérieur à un seuil prédéfini et le mode en boucle ouverte augmente à nouveau le couple moteur pour relancer la roue dont le glissement est redevenu faible. Ces deux modes ne réalisent pas de régulation du glissement de façon simultanée, mais successivement en fonction des conditions de glissement pour une meilleure prestation. Cette combinaison des deux modes de régulation est une commutation C, commandée par une fonction logique d'activation, prenant en compte le niveau de glissement des roues motrices pour une vitesse de déplacement du véhicule qui soit suffisante, soit supérieure à un seuil de quelques km/h.

La figure 6 est un organigramme des différentes commutations entre les deux modes de régulation du couple moteur, en fonction du niveau de glissement. Le procédé passe de la régulation asymétrique normale à la régulation asymétrique limite quand le glissement $S_{xFA}$ de la roue motrice $R_{FA}$ sur forte adhérence est supérieur au seuil maximal de glissement S'$_{FA}$, et inversement repasse de la régulation asymétrique limite à la régulation asymétrique normale quand le glissement $S_{xFA}$ de la roue motrice $R_{FA}$ sur forte adhérence redevient inférieur au seuil minimal de glissement $S_{FA}$.

Un second objet de l'invention est un dispositif de mise en oeuvre du procédé de contrôle du glissement des deux roues motrices pour véhicule automobile, comprenant des moyens d'estimation de la vitesse du véhicule, des moyens d'estimation du couple moteur et des capteurs de vitesse des roues, caractérisé en ce qu'il comprend de plus :

- deux régulateurs, l'un du couple de freinage et l'autre du couple moteur, en boucle fermée $B_F$, de type proportionnel intégral avec avance de phase, de gain K(p) :

$$K(p) = K_P * \frac{T_i + p}{p} * \frac{1 + \tau_1 p}{1 + \tau_2 p}$$

avec $\tau_1$ et $\tau_2$ des constantes d'avance de phase, et $K_p$ et $T_i$ des paramètres de commande,
associés chacun à un saturateur, pour que respectivement le couple de freinage et le couple moteur soient toujours inférieurs à la demande du conducteur,

- un régulateur du couple moteur en boucle ouverte $B_O$, ajoutant au couple moteur réel délivré par le moteur une rampe de pente $K_A$ à chaque instant n d'échantillonnage, de période d'échantillonnage T :

$$C_{M,n} = C_{M,n-1} + K_A * T$$

associé à un saturateur pour que le couple moteur soit toujours inférieur à la demande du conducteur,
- des moyens de commutation C entre les deux régulateurs du couple moteur sur signal d'état de la part d'un module logique L d'activation.

Le procédé de régulation selon l'invention met en oeuvre deux modes de régulation différents en fonction du glissement des roues motrices qui roulent sur adhérence asymétrique, afin de limiter au maximum la mise au point de la commande, de sorte que les performances obtenues sont meilleures que celles des procédés antérieurs pour un réglage simplifié. De plus, la régulation Proportionnelle Intégrale avec avance de phase permet de réaliser un meilleur compromis entre les performances, la stabilité et la robustesse que les régulateurs actuels, de type Proportionnel ou Proportionnel Intégral.
Enfin, ce procédé est particulièrement bien adapté aux stratégies d'anti-patinage mises en oeuvre sur des véhicules automobiles à traction, à propulsion, à quatre roues motrices ou hybrides dotés d'actionneurs électriques.

## Revendications

1. Procédé de contrôle du glissement des deux roues motrices sur adhérence asymétrique pour véhicule automobile, par régulation du couple de freinage et du couple moteur, délivrés aux roues par les actionneurs du véhicule, dans le cas où elles dépassent un seuil prédéfini de glissement, procédé qui, lors de la détection d'une situation de roulage à une vitesse supérieure à un seuil défini et sur une route à adhérence asymétrique, quand une des roues de l'essieu moteur patine, il applique à la roue motrice sur faible adhérence d'une part, un couple de freinage ($C_F$) obtenu par une régulation par asservissement, en boucle fermée, de la vitesse de rotation ($\dot{\theta}_{rfa}$) de ladite roue à une consigne ($\dot{\theta}_{rfa}^{d}$) qui est fonction d'une consigne de glissement et d'autre part, un couple moteur ($C_M$) obtenu par une régulation dépendant du niveau de glissement de la roue sur forte adhérence du même essieu moteur.

2. Procédé de contrôle selon la revendication 1, **caractérisé en ce que** la consigne de vitesse de rotation ($\dot{\theta}_{rfa}^{d}$) de la roue motrice sur faible adhérence est établie également en fonction de la consigne de glissement ($S_{Cfa}$), de la vitesse de référence ($V_{ref}$) du véhicule désirée par le conducteur et du rayon (r) de la roue :

$$\dot{\theta}_{rfa}^{d} = \left(1 + S_{Cfa}\right)\frac{V_{ref}}{r}$$

3. Procédé de contrôle selon la revendication 1, **caractérisé en ce qu'**il propose une régulation du couple de freinage ($C_F$), en boucle fermée, par asservissement de la vitesse ($\dot{\theta}_{rfa}$) de rotation de la roue motrice ($R_{fa}$) sur faible adhérence, du type proportionnel intégral avec avance de phase, exprimé en continu par l'équation suivante :

$$K(p) = K_p * \frac{T_i + p}{p} * \frac{1 + \tau_1 p}{1 + \tau_2 p}$$

avec $\tau_1$ et $\tau_2$ des constantes d'avance de phase, et $K_p$ et $T_i$ des paramètres de commande.

4. Procédé de contrôle selon la revendication 3, **caractérisé en ce que** le mode de régulation du couple de freinage ($C_F$), en boucle fermée, par asservissement de la vitesse de rotation ($\dot{\theta}_{rfa}$) de ladite roue motrice sur faible adhérence, comprend une première commande ($F_1$) issue d'un premier filtre ($K_1$), recevant en entrée la différence entre la vitesse de rotation ($\dot{\theta}_{rfa}$) mesurée et la consigne de vitesse $(\dot{\theta}_{rfa}^d)$, de fonction de transfert $K_1(p)$ telle que :

$$K_1(p) = \frac{4\tau_2 K_p (T_i + p)(1 + \tau_1 p)}{(1 + 2\tau_2 p)^2}$$

avec $\tau_1$ et $\tau_2$ des constantes d'avance de phase, et $K_p$ et $T_i$ des paramètres de commande,
à laquelle s'ajoute une deuxième commande ($F_2$) établie en fonction de l'actionneur de freinage à partir d'un second filtre ($K_2$) s'appliquant au couple de freinage réel ($C_F$) délivré par les freins (F) du véhicule et de fonction de transfert $K_2(p)$ telle que :

$$K_2(p) = \frac{1}{(1 + 2\tau_2 p)(1 + 2\tau_2 p)}$$

la somme de ces deux commandes passant dans un saturateur, pour que le couple de freinage soit toujours inférieur à la demande ($D_F$) du conducteur, avant de constituer la consigne de couple ($C_{F\text{-cons}}$) pour l'actionneur de freinage.

5. Procédé de contrôle selon l'une des revendications 1 à 4, **caractérisé en ce qu'**il propose deux modes de régulation du couple moteur différents selon le niveau de glissement de la roue motrice sur forte adhérence, soit si le glissement de ladite roue est inférieur à un seuil minimal déterminé ($S_{FA}$), lui-même inférieur à la consigne de glissement ($S_{CFA}$), un mode de régulation du couple moteur en boucle ouverte, et si le glissement devient supérieur à un seuil maximal déterminé ($S'_{FA}$), un mode de régulation par asservissement, en boucle fermée, de la vitesse de rotation de ladite roue motrice sur forte adhérence à une consigne qui est fonction d'une consigne de glissement.

6. Procédé de contrôle selon la revendication 5, **caractérisé en ce qu'**il applique simultanément à la roue motrice ($R_{fa}$) sur faible adhérence, une régulation du couple moteur en boucle ouverte, qualifiée d'asymétrique normale, quand le glissement ($S_{xFA}$) de la roue motrice ($R_{FA}$) sur forte adhérence est inférieur à un seuil minimal de glissement ($S_{FA}$), consistant à ajouter au couple moteur ($C_M$) réel délivré par le moteur du véhicule une rampe de pente ($K_A$) à chaque instant n d'échantillonnage, tel que :

$$(\mathbf{E_4}) \qquad C_{M,n} = C_{M,n-1} + K_A * T$$

dans laquelle T est la période d'échantillonnage.

7. Procédé de contrôle selon la revendication 5, **caractérisé en ce qu'**il applique simultanément à la roue motrice sur faible adhérence, une régulation du couple moteur en boucle fermée, qualifiée d'asymétrique limite, quand le glissement ($S_{xFA}$) de la roue sur forte adhérence devient supérieur à un seuil maximal ($S'_{FA}$), consistant en un asservissement de la vitesse de rotation ($\dot{\theta}_{rFA}$) de la roue sur forte adhérence à une consigne $(\dot{\theta}_{rFA}^{d})$, déterminée par rapport à la consigne de glissement, cette boucle fermée ($B_F$) délivrant une consigne de couple ($C'_{M\text{-cons}}$) au moteur (M) du véhicule qui va appliquer un couple moteur ($C'_M$) réel aux roues motrices du véhicule.

8. Procédé de contrôle selon la revendication 7, **caractérisé en ce que** le couple moteur ($C_M$) délivré par le moteur (M) et la vitesse de rotation ($\dot{\theta}_{rFA}$) mesurée de la roue motrice sur forte adhérence sont envoyés à l'entrée de la boucle fermée ainsi que la vitesse de référence ($V_{ref}$) du véhicule pour le calcul de la consigne de vitesse de rotation $(\dot{\theta}_{rFA}^{d})$ de la roue, cette boucle étant destinée à réguler la vitesse ($\dot{\theta}_{rFA}$) de rotation de ladite roue sur forte adhérence sur la consigne qui est établie en fonction d'une consigne de glissement ($S_{CFA}$) :

$$\dot{\theta}_{rFA}^{d} = \left(1 + S_{CFA}\right)\frac{V_{ref}}{r}$$

9. Procédé de contrôle selon les revendications 1 à 8, **caractérisé en ce que** les consignes de glissement sont fonction de plusieurs critères dynamiques du véhicule, tels que l'enfoncement de la pédale d'accélérateur, l'angle du volant, la vitesse de référence du véhicule, le signe de la dérivée du glissement.

10. Dispositif de mise en oeuvre du procédé de contrôle du glissement d'une roue motrice pour véhicule automobile selon les revendications 1 à 9, comprenant des moyens d'estimation de la vitesse du véhicule, des moyens d'estimation du couple moteur et des capteurs de vitesse des roues, **caractérisé en ce qu'**il comprend de plus :

- deux régulateurs, l'un du couple de freinage et l'autre du couple moteur, en boucle fermée ($B_F$), de type proportionnel intégral avec avance de phase, de fonction de transfert K(p) :

$$K(p) = K_p * \frac{T_i + p}{p} * \frac{1 + \tau_1 p}{1 + \tau_2 p}$$

avec $\tau_1$ et $\tau_2$ des constantes d'avance de phase, et $K_p$ et $T_i$ des paramètres de commande,
associés chacun à un saturateur, pour que respectivement le couple de freinage et le couple moteur soient toujours inférieurs à la demande du conducteur,
- un régulateur du couple moteur en boucle ouverte ($B_O$), ajoutant au couple moteur réel délivré par le moteur une rampe de pente ($K_A$) à chaque instant n d'échantillonnage, de période d'échantillonnage T :

$$C_{M,n} = C_{M,n-1} + K_A * T$$

associé à un saturateur pour que le couple moteur soit toujours inférieur à la demande du conducteur,
- des moyens de commutation (C) entre les deux régulateurs du couple moteur sur signal d'état de la part d'un module logique (L) d'activation.

**Claims**

1. Method for controlling the slip of the two driving wheels on asymmetrical road grip for a motor vehicle, by regulating the braking torque and the engine torque, delivered to the wheels by the actuators of the vehicle, in the case where they exceed a predefined slip threshold, whereby said method, upon the detection of a situation of running at a speed above a defined threshold and on a road with asymmetrical road grip, when one of the wheels of the engine axle skids, it applies to the driving wheel on weak road grip, on the one hand, a braking torque ($C_F$) obtained by a regulation by servo-controlling, in closed loop mode, the speed of rotation ($\dot{\theta}_{rfa}$) of said wheel to a setpoint $(\dot{\theta}_{rfa}^{d})$ which is a function of a slip setpoint and, on the other hand, an engine torque ($C_M$) obtained by a regulation dependent on the level of slip of the wheel on strong road grip of the same engine axle.

2. Control method according to Claim 1, **characterized in that** the rotation speed setpoint $(\dot{\theta}_{rfa}^{d})$ of the driving wheel on weak road grip is established also as a function of the slip setpoint ($S_{Cfa}$), of the reference speed ($V_{ref}$) of the vehicle desired by the driver and of the radius (r) of the wheel:

$$\dot{\theta}_{rfa}^{d} = \left(1 + S_{Cfa}\right)\frac{V_{ref}}{r} \quad .$$

3. Control method according to Claim 1, **characterized in that** it proposes a regulation of the braking torque ($C_F$), in closed loop mode, by servo-controlling the speed ($\dot{\theta}_{rfa}$) of rotation of the driving wheel ($R_{fa}$) on weak road grip, of the proportional integral type with phase advance, expressed continuously by the following equation:

$$K(p) = K_p * \frac{T_i + p}{p} * \frac{1 + \tau_1 p}{1 + \tau_2 p}$$

with $\tau_1$ and $\tau_2$ being phase advance constants, and $K_p$ and $T_1$ being command parameters.

4. Control method according to Claim 3, **characterized in that** the mode of regulation of the braking torque ($C_F$), in closed loop mode, by servo-controlling the speed of rotation ($\dot{\theta}_{rfa}$) of said driving wheel on weak road grip, comprises a first command ($F_1$), obtained from a first filter ($K_1$), receiving as input the difference between the measured speed of rotation ($\dot{\theta}_{rfa}$) and the speed setpoint $(\dot{\theta}_{rfa}^{d})$, of transfer function $K_1(p)$ such that:

$$K_1(p) = \frac{4\tau_2 K_p (T_i + p)(1 + \tau_1 p)}{(1 + 2\tau_2 p)^2}$$

with $\tau_1$ and $\tau_2$ being phase advance constants, and $K_p$ and $T_1$ being command parameters,
to which is added a second command ($F_2$) established as a function of the braking actuator from a second filter ($K_2$) being applied to the real braking torque ($C_F$) delivered by the brakes (F) of the vehicle and of transfer function $K_2$(p) such that:

$$K_2(p) = \frac{1}{(1 + 2\tau_2 p)(1 + 2\tau_2 p)}$$

the sum of these two commands passing into a saturator, so that the braking torque is always less than the demand ($D_F$) of the driver, before constructing the torque setpoint ($C_{F\text{-cons}}$) for the braking actuator.

5. Control method according to one of Claims 1 to 4, **characterized in that** it proposes two different engine torque regulation modes depending on the level of slip of the driving wheel on strong road grip, i.e. if the slip of said wheel is below a determined minimum threshold ($S_{FA}$), itself below the slip setpoint ($S_{CFA}$), an open loop engine torque regulation mode, and if the slip becomes greater than a determined maximum threshold ($S'_{FA}$), a mode of regulation by servo-controlling, in closed loop mode, of the speed of rotation of said driving wheel on strong road grip to a setpoint which is a function of a slip setpoint.

6. Control method according to Claim 5, **characterized in that** it applies simultaneously to the driving wheel ($R_{fa}$) on weak road grip a regulation of the engine torque in open loop mode, qualified as normal asymmetrical, when the slip ($S_{xFA}$) of the driving wheel ($R_{FA}$) on strong road grip is below a minimum slip threshold ($S_{FA}$), consisting in adding to the real engine torque ($C_M$) delivered by the engine of the vehicle a ramp of slope ($K_A$) at each sampling instant n, such that:

$$(E_4) \qquad C_{M,n} = C_{M,n-1} + K_A * T$$

in which T is the sampling period.

7. Control method according to Claim 5, **characterized in that** it applies simultaneously to the driving wheel on weak road grip a regulation of the engine torque in closed loop mode, qualified as limit asymmetrical, when the slip ($S_{xFA}$) of the wheel on strong road grip becomes greater than a maximum threshold ($S'_{FA}$), consisting in a servo-controlling of the speed of rotation ($\dot{\theta}_{rFA}$) of the wheel on strong road grip to a setpoint $(\dot{\theta}_{rFA}^{d})$, determined relative to the slip setpoint, this closed loop ($B_F$) delivering a torque setpoint ($C'_{M\text{-cons}}$) to the engine (M) of the vehicle which will apply a real engine torque ($C'_M$) to the driving wheels of the vehicle.

8. Control method according to Claim 7, **characterized in that** the engine torque ($C_M$) delivered by the engine (M) and the measured speed of rotation ($\dot{\theta}_{rFA}$) of the driving wheel on strong road grip are sent to the input of the closed loop together with the reference speed ($V_{ref}$) of the vehicle for the computation of the rotation speed setpoint $(\dot{\theta}_{rFA}^{d})$ of the wheel, this loop being intended to regulate the speed ($\dot{\theta}_{rFA}$) of rotation of said wheel on strong road grip to the setpoint which is established as a function of a slip setpoint ($S_{CFA}$):

$$\dot{\theta}_{rFA}^{d} = (1 + S_{CFA}) \frac{V_{ref}}{r}.$$

9. Control method according to Claims 1 to 8, **characterized in that** the slip setpoints are a function of a number of dynamic vehicle criteria, such as the depression of the accelerator pedal, the steering wheel angle, the reference speed of the vehicle, the sign of the derivative of the slip.

10. Device for implementing the method for controlling the slip of a driving wheel for a motor vehicle according to Claims 1 to 9, comprising means for estimating the speed of the vehicle, means for estimating the engine torque and wheel speed sensors, **characterized in that** it also comprises:

   - two regulators, one for the braking torque and the other for the engine torque, in closed loop mode ($B_F$), of proportional integral type with phase advance, of transfer function K(p) :

$$K(p) = K_p * \frac{T_i + p}{p} * \frac{1 + \tau_1 p}{1 + \tau_2 p}$$

with $\tau_1$ and $\tau_2$ being phase advance constants, and $K_p$ and $T_1$ being command parameters, each associated with a saturator, so that, respectively, the braking torque and the engine torque are always less than the demand of the driver,

- a regulator of the engine torque in open loop mode ($B_O$), adding to the real engine torque delivered by the engine a ramp of slope ($K_A$) at each sampling instant n, of sampling period T:

$$C_{M,n} = C_{M,n-1} + K_A * T$$

associated with a saturator so that the engine torque is always less than the demand of the driver,
- means (C) for switching between the two regulators of the engine torque upon a status signal from an activation logic module (L).

**Patentansprüche**

1. Verfahren zur Steuerung des Schlupfs der zwei Antriebsräder bei asymmetrischer Adhäsion für ein Kraftfahrzeug, durch Regelung des Bremsmoments und des Antriebsdrehmoments, die an die Räder durch die Stellantriebe des Fahrzeugs geliefert werden, in dem Fall, in dem sie eine vordefinierte Schlupfschwelle überschreiten, Verfahren, das bei der Erfassung einer Fahrsituation mit einer Geschwindigkeit höher als eine definierte Schwelle und auf einer Straße mit asymmetrischer Adhäsion, wenn eines der Räder der Antriebsachse durchdreht, an das Antriebsrad bei schwacher Adhäsion einerseits ein Bremsmoment ($C_F$), das durch eine Regelung, durch Nachführen in geschlossener Schleife, der Drehgeschwindigkeit ($\dot{\theta}_{rfa}$) des Rads auf einen Sollwert ($\dot{\theta}_{rfa}^d$) erhalten wird, der von einem Schlupfsollwert abhängt, und andererseits ein Antriebsdrehmoment ($C_M$) anwendet, das durch eine Regelung erhalten wird, die vom Schlupfpegel des Rads bei starker Adhäsion der gleichen Antriebsachse abhängt

2. Steuerverfahren nach Anspruch 1, **dadurch gekennzeichnet, dass** der Drehgeschwindigkeitssollwert ($\dot{\theta}_{rfa}^d$) des Antriebsrads bei schwacher Adhäsion ebenfalls abhängig vom Schlupfsollwert ($S_{Cfa}$), von der vom Fahrer gewünschten Bezugsgeschwindigkeit ($V_{ref}$) des Fahrzeugs und vom Radius (r) des Rads erstellt wird:

$$\dot{\theta}_{rfa}^d = \left(1 + S_{Cfa}\right)\frac{V_{ref}}{r}$$

3. Steuerverfahren nach Anspruch 1, **dadurch gekennzeichnet, dass** es eine Regelung des Bremsmoments ($C_F$), in geschlossener Schleife, durch Nachführung der Drehgeschwindigkeit ($\dot{\theta}_{rfa}$) des Antriebsrads ($R_{fa}$) bei schwacher Adhäsion von der Art Proportional-Integral mit Phasenvoreilung vorschlägt, kontinuierlich ausgedrückt durch die folgende Gleichung:

$$K(p) = K_p * \frac{T_i + p}{p} * \frac{1 + \tau_1 p}{1 + \tau_2 p}$$

wobei $\tau_1$ und $\tau_2$ Phasenvoreilungskonstanten und $K_p$ und $T_i$ Steuerparameter sind.

4. Steuerverfahren nach Anspruch 3, **dadurch gekennzeichnet, dass** die Betriebsart der Regelung des Bremsmoments ($C_F$), in geschlossener Schleife, durch Nachführung der Drehgeschwindigkeit ($\dot{\theta}_{rfa}$) des Antriebsrads bei schwacher Adhäsion, eine erste Steuerung ($F_1$) enthält, die von einem ersten Filter ($K_1$) stammt, das am Eingang die Differenz zwischen der gemessenen Drehgeschwindigkeit ($\dot{\theta}_{rfa}$) und dem Geschwindigkeitssollwert $(\dot{\theta}_{rfa}^{d})$ empfängt, mit einer Transferfunktion $K_1(p)$ derart, dass gilt:

$$K_1(p) = \frac{4\tau_2 K_p (T_i + p)(1 + \tau_1 p)}{(1 + 2\tau_2 p)^2}$$

wobei $\tau_1$ und $\tau_2$ Phasenvoreilungskonstanten und $K_p$ und $T_i$ Steuerparameter sind,
zu der sich eine zweite Steuerung ($F_2$) hinzufügt, die abhängig vom Bremsstellantrieb ausgehend von einem zweiten Filter ($K_2$) erstellt wird, das an das das von den Bremsen (F) des Fahrzeugs gelieferte reale Bremsmoment ($C_F$) angewendet wird, und mit einer Transferfunktion $K_2(p)$ derart, dass gilt:

$$K_2(p) = \frac{1}{(1 + 2\tau_2 p)(1 + 2\tau_2 p)}$$

wobei die Summe dieser zwei Steuerungen in einen Sättiger geht, damit das Bremsmoment immer geringer als die Anforderung ($D_F$) des Fahrers ist, ehe der Momentsollwert ($C_{F\text{-Cons}}$) für den Bremsstellantrieb gebildet wird.

5. Steuerverfahren nach einem der Ansprüche 1 bis 4, **dadurch gekennzeichnet, dass** es zwei verschiedene Regelbetriebsarten des Antriebsmoments je nach dem Schlupfpegel des Antriebsrads bei starker Adhäsion vorschlägt, entweder, wenn der Schlupf des Rads geringer als eine bestimmte Mindestschwelle ($S_{FA}$) ist, die selbst niedriger als der Schlupfsollwert ($S_{CFA}$) ist, eine Regelbetriebsart des Antriebsmoments in offener Schleife, und wenn der Schlupf höher als eine bestimmte Höchstschwelle ($S'_{FA}$) wird, eine Regelbetriebsart durch Nachführung, in geschlossener Schleife, der Drehgeschwindigkeit des Antriebsrads bei starker Adhäsion auf einen Sollwert, der von einem Schlupfsollwert abhängt.

6. Steuerverfahren nach Anspruch 5, **dadurch gekennzeichnet, dass** es gleichzeitig an das Antriebsrad ($R_{fa}$) bei schwacher Adhäsion eine Regelung des Antriebsmoments in offener Schleife anwendet, als normale Asymmetrie bezeichnet, wenn der Schlupf ($S_{xFA}$) des Antriebsrads ($R_{FA}$) bei starker Adhäsion geringer als eine Mindestschlupfschwelle ($S_{FA}$) ist, die darin besteht, zum vom Motor des Fahrzeugs gelieferten realen Antriebsmoment ($C_M$) eine Rampe mit der Neigung ($K_A$) in jedem Abtastmoment n hinzuzufügen, derart, dass gilt:

$$(E_4) \qquad\qquad C_{M,n} \ = \ C_{M,n-1} + K_A{}^* T$$

wobei T die Abtastperiode ist.

7. Steuerverfahren nach Anspruch 5, **dadurch gekennzeichnet, dass** es gleichzeitig an das Antriebsrad bei schwacher Adhäsion eine Regelung des Antriebsmoments in geschlossener Schleife anwendet, als Grenzasymmetrie bezeichnet, wenn der Schlupf ($S_{xFA}$) des Rads bei starker Adhäsion höher als eine Höchstschwelle ($S'_{FA}$) wird, die aus einer Regelung der Drehgeschwindigkeit ($\dot{\theta}_{rFA}$) des Rads bei starker Adhäsion auf einen Sollwert $(\dot{\theta}_{rFA}^{d})$ besteht, der bezüglich des Schlupfsollwerts bestimmt wird, wobei diese geschlossene Schleife ($B_F$) einen Momentsollwert ($C'_{M\text{-cons}}$) an den Motor (M) des Fahrzeugs liefert, der ein reales Antriebsmoment ($C'_M$) an die Antriebsräder des Fahrzeugs anwendet.

8. Steuerverfahren nach Anspruch 7, **dadurch gekennzeichnet, dass** das vom Motor (M) gelieferte Antriebsmoment ($C_M$) und die gemessene Drehgeschwindigkeit ($\dot{\theta}_{rFA}$) des Antriebsrads bei starker Adhäsion an den Eingang der geschlossenen Schleife sowie die Bezugsgeschwindigkeit ($V_{ref}$) des Fahrzeugs zur Berechnung des Drehgeschwindigkeitssollwerts $(\dot{\theta}_{rFA}^{d})$ des Rads gesendet wird, wobei diese Schleife dazu bestimmt ist, die Drehgeschwindigkeit ($\dot{\theta}_{rFA}$) des Rads bei starker Adhäsion auf den Sollwert zu regeln, der abhängig von einem Schlupfsollwert ($S_{CFA}$) erstellt wird:

$$\dot{\theta}_{rFA}^{d} = (1 + S_{CFA})\frac{V_{ref}}{r}.$$

9. Steuerverfahren nach den Ansprüchen 1 bis 8, **dadurch gekennzeichnet, dass** die Schlupfsollwerte von mehreren dynamischen Kriterien des Fahrzeugs, wie dem Eindrücken des Gaspedals, dem Winkel des Lenkrads, der Bezugsgeschwindigkeit des Fahrzeugs, dem Vorzeichen der Ableitung des Schlupfs abhängen.

10. Vorrichtung zur Durchführung des Steuerverfahrens des Schlupfs eines Antriebsrads für ein Kraftfahrzeug nach einem der Ansprüche 1 bis 9, die Einrichtungen zur Schätzung der Geschwindigkeit des Fahrzeugs, Einrichtungen zur Schätzung des Antriebsmoments und Geschwindigkeitssensoren der Räder enthält, **dadurch gekennzeichnet, dass** sie außerdem enthält:

- zwei Regler, einer des Bremsmoments und der andere des Antriebsmoments, in geschlossener Schleife ($B_F$), von der Art Proportional-Integral mit Phasenvoreilung, einer Transferfunktion K(p):

$$K(p) = K_p * \frac{T_i + p}{p} * \frac{1 + \tau_1 p}{1 + \tau_2 p}$$

wobei $\tau_1$ und $\tau_2$ Phasenvoreilungskonstanten und $K_p$ und $T_i$ Steuerparameter sind,
die je einem Sättiger zugeordnet sind, damit das Bremsmoment bzw. das Antriebsmoment immer niedriger als die Anforderung des Fahrers sind,
- ein Regler des Antriebsmoments in offener Schleife ($B_O$), der zum vom Motor des Fahrzeugs geliefert realen Antriebsmoment eine Rampe mit der Neigung ($K_A$) in jedem Abtastmoment n hinzufügt, einer Abtastperiode T:

$$C_{M,n} = C_{M,n-1} + K_A * T$$

der einem Sättiger zugeordnet ist, damit das Antriebsmoment immer niedriger als die Anforderung des Fahrers ist,
- Schalteinrichtungen (C) zwischen den zwei Reglern des Antriebsmoments bei einem Zustandssignal von einem logischen Aktivierungsmodul (L).

## FIG_1

## FIG_6

## FIG_2

FIG_4

FIG_3

$V_{ref}$

$S_{Cfa}$

VITESSE

$\dot{\Theta}^d_{rfa}$

$K_1$

$K_2$

$F_1$ $F_2$

Sat1

$B_F$

$C_{F\_cons}$

ACTIONNEUR FREINS

$C_F$

$C_F$

$F$

ROUE VEHICULE

$R_{fa}$

$\dot{\Theta}_{rfa}$

$C_M$ $D_F$

LOGIQUE

L

FIG_5a

$B_O$

T

$K_A$

$N$

$S_{at2}$

$C_M$

$C_{M\_cons}$

ACTIONNEUR MOTEUR

$C_M$

MOTEUR VEHICULE

$R_{FA}$

$M$

$D_M$

LOGIQUE

L

## FIG_5b

EP 2 081 809 B1

**EP 2 081 809 B1**

## RÉFÉRENCES CITÉES DANS LA DESCRIPTION

**Documents brevets cités dans la description**

- US 6161907 A
- DE 4011974